Europäisches Patentamt

European Patent Office

Office européen des brevets

(11) Publication number: **0 270 700 B1**

# EUROPEAN PATENT SPECIFICATION

(45) Date of publication of patent specification: **27.05.92**  (51) Int. Cl.⁵: **G02B 5/32**

(21) Application number: **86117095.9**

(22) Date of filing: **09.12.86**

The file contains technical information submitted after the application was filed and not included in this specification

(54) **Apparatus and method for producing a hologram.**

(43) Date of publication of application:
**15.06.88 Bulletin 88/24**

(45) Publication of the grant of the patent:
**27.05.92 Bulletin 92/22**

(84) Designated Contracting States:
**DE FR GB**

(56) References cited:
**US-A- 3 628 849
US-A- 4 175 823
US-A- 4 455 088**

**JOURNAL OF THE OPTICAL SOCIETY OF AMERICA, vol. 67, no. 8, August 1977, pages 1021-1027, The Optical Society of America; C.H.F. VELZEL: "On the imaging properties of holographic gratings"**

**OPTICA ACTA, vol. 28, no. 12, December 1981, pages 1601-1610, Taylor & Francis Ltd., London, GB; B.J. BROWN et al.: "Holographic grating aberration correction for a Rowland circle mount II"**

(73) Proprietor: **SHIMADZU CORPORATION
1, Nishinokyo-Kuwabaracho
Nakagyo-ku Kyoto-shi Kyoto 604(JP)**

(72) Inventor: **Noda, Hideyuki
808-304, Takezono 2-chome Sakuramura
Niiharigun Ibaraki(JP)**
Inventor: **Koike, Masato
1-10, Higashisakaitanicho
Oharano Nishikyo-ku Kyoto(JP)**

(74) Representative: **Kraus, Walter, Dr. et al
Patentanwälte Kraus, Weisert & Partner
Thomas-Wimmer-Ring 15
W-8000 München 22(DE)**

**Description**

The invention relates to an apparatus for producing a hologram, comprising:
a first means for generating and projecting a first coherent light beam onto a substrate;
a second means for generating and projecting a second coherent light beam onto said substrate, such that the interference of said first and second coherent beams forms said hologram on said substrate;
wherein said generating means of at least one of said first and second coherent light beams generates a light beam which is astigmatic, wherein said astigmatism has two different focal lengths in a first plane and a second plane perpendicular thereto, said first plane is defined by the center of the hologram and directions of principal rays of the beams.

Furthermore, the invention relates to a method of producing a hologram, comprising:
projecting two beams of coherent light onto a substrate, wherein at least one of said beams is astigmatic, said astigmatism having two different focal lengths in a first plane and in a second plane perpendicular thereto, such that the interference of said two beams forms said hologram on the substrate, wherein said first plane is defined by the center of said hologram and directions of principal rays of the beams.

Description of the Related Art

Since development of the holographic grating, many improvements have been proposed in formulating the groove pattern. In the field of spectrometers incorporating a concave grating, some unique patterns have been proposed to prevent aberrations caused by concave gratings. However, the conventional art of forming groove patterns has been based on the use of two spherically dispersing stigmatic beams which will logically result in the formation of intersectional loci in the nature of a hyperboloid of revolution on a grating substrate, whereby further compensation of such higher order aberrations was not attained as an aberration of the vertical direction, because conventional art based on the hyperboloidal pattern should be directed to eliminate primary aberrations, such as of spherical or coma nature.

Making reference to a plane grating having straight lines in parallel with equal intervals therebetween, such a grating has no aberration of itself, but in applying such to a spectrometer wherein collimators and telemeters are mostly concave mirrors, these concave mirrors are mounted in an off-axis orientation which will cause aberration. In order to overcome such systematic aberrations, holographical formation of a groove pattern having non-straight and/or unequal intervals therebetween has come into use. However, the conventional art with the use of spherical beams of a stigmatic nature has been insufficient to eliminate the heretofore recognized aberrations.

An appartus and a method for producing a hologram of the types mentioned in the beginning are disclosed in US-A-4 175 823 as means for the holographic recording of data which is in the form of electrical signals which signals are used to pulse modulate an object wave which is recorded with a coherent reference wave to produce hybrid holograms on a moving light-sensitive storage medium, wherein hybrid holograms are holograms which exhibit translation-invariance properties in two directions but not at right angles to these directions. For recording of such hybrid hologram there are used an astigmatic object wave and an astigmatic reference wave, with each wave having a focal line extending parallel to the direction of feed being coplanar and each wave having a focal line extending perpendicular to the direction of feed being mirror symmetrical to the storage medium. In order to keep low the number of holograms sequentially superimposed in the direction of movement of the storage medium and thus to optimize the degree of diffraction efficiency the vertical focal lines are adjusted to be at a short distance from the storage medium.

In contrast to the present invention the hologram produced according to US-A-4 175 823 is a data recording hologram containing data which have been introduced into said hologram by modulating the aforementioned object wave and the above-mentioned degree of diffraction efficiency refers to the procedure of producing the hologram however not to a use of said hologram as a diffractive element.

Arrangements for constructing a holographic diffraction grating are described in US-A-3 628 849. This document discloses an embodiment wherein the equiphase surfaces of the grating are nonquadratic surfaces such as those obtained as loci of the maxima of luminous intensity upon the interference of two beams originating from two point surfaces, one of the two beams being modified by the introduction into the beam of a phase object. The grating obtained under these conditions makes it possible to compensate the aberrations of an optical system for which it is intended.

The present invention provides an apparatus for producing a hologram of the type mentioned in the beginning, which is characterized in that said hologram is a holographic grating having a groove pattern formed thereon; and off-axis non-axisymmetrical optical means are used to provide stigmatic-to-astigmatic beam conversions.

Furthermore, the invention provides a method for producing a hologram of the type mentioned in the beginning, which is characterized in that said hologram is a holographic grating having a groove pattern; and off-axis non-axisymmetrical optical means are used to provide stigmatic-to-astigmatic beam conversions.

As regards the holographic grating produced by the apparatus and method of the invention, the present invention relates to a holographic grating which is generally defined as a diffraction grating having a groove pattern produced by holography or by recording of interferential fringes formed from two coherent light beams onto a photosensitive material coated on a grating substrate. Such a diffraction grating is used preferably in spectrometry as diffraction element as explained in more detail below in connection with the drawings.

As noted above, in the process of forming a groove pattern on a grating substrate by holography, spherically dispersive beams have been used which have no astigmatic nature in convergence. In contrast, this invention proposes in the above process, at least in either of the two coherent lights for recording the pattern, the use of an astigmatic coherent beam which has two different focal points in a plane defined by the grating center and the direction of travel of principal rays and also in a plane vertical thereto. Such an astigmatic beam is obtained, for instance, by reflecting a stigmatic spherical beam onto a mirror having a concave surface defined by an ellipsoid of revolution.

In other words, a holographic grating of this invention is featured in having a groove pattern which is formed by interference fringes of two mutually interferable beams (hereinafter referred to as recording light), wherein either one or both recording lights are of an astigmatic beam having two different convergent points in vertical and horizontal planes in the direction in which the principal rays travel.

Astigmatism defined in the present invention, as noted above, will be further explained with reference to Fig. A, wherein a point source of light 1a radiates an isometric spherical beam (stigmatic beam) 2a defining incident principal ray, upon reflection on a concave mirror 3a, the beam is converted to be astigmatic light of which sagittal rays 4a converge at a sagittal (vertical) focal point which is marked by v and meridional rays 5a which converge at a meridional (horizontal) focal point which is marked by h wherein these two focal points are separated or not coincident each other in the reflected direction of travel of the principal ray 6a.

Selection of whether an astigmatic beam is used in one or two recording lights, further determination of how much difference in convergent points is rendered between the vertical and horizontal planes are of the nature of choice in design in view of ultimate characteristics desired with a target grating to be manufactured. However, it is held distinctive with any embodiment of this invention that, with the use of astigmatic recording lights, technical parameters in designing a groove pattern are enriched and this increase in degree of choice imparts more abilities to overcome aberrations that have not previously been compensated for.

Namely, stigmatic light having an isometric spherical wave-front is determined by the two parameters, i.e., distance from a point source to a grating substrate and an incident angle to it. In contrast, an astigmatic beam has a biaxial converging property for the horizontal (meridional) and the vertical (sagittal) directions, and may be appropriate to compensate for the aberrations of the vertical direction involved in optical devices. Practically, an astigmatic beam is derived from an off-axis reflection by a spherical mirror, and is defined by parameters due to the distances from the point source of light to the mirror and from the mirror to the grating substrate, the incident angles to the mirror and the grating substrate, and the curvature of the mirror. The new increase in parameters can be utilized in new attempt for compensating remaining aberrations of a higher order involved in optical instruments.

The invention will be hereinbelow explained with reference to the attached drawings and further objects and advantages of the invention will be apparent in the following.

Brief description of the drawings

Fig. A illustrates how an astigmatic beam in the present invention is produced;

Fig. 1 shows a plan view of a conventional system for recording a groove pattern onto a grating substrate;

Fig. 2 shows a plan view of an inventive system for recording a groove pattern onto a grating substrate;

Fig. 3 shows a plan view of another inventive system for recording a groove pattern onto a grating substrate;

Fig. 4 illustrates light passages in a spectrometer to show arrangements including a grating, incident light, and locations of resultant loci of spectrums;

Fig. 5 illustrates results of eliminating aberrations in respect to the inventive gratings as compared with conventional ones;

Fig. 6 shows a plan view of a spectrometer incorporating an inventive grating;

Fig. 7 shows a plan view of still another inventive system for recording a groove pattern onto a grating substrate;

Fig. 8 shows a plan view of a spectrometer incorporating an inventive grating;

Fig. 9 shows a plan view of still more further inventive system for recording a groove pattern onto a grating substrate;

Fig. 10 illustrates other results of comparative tests for eliminating aberrations in respect to inventive gratings as compared with conventional ones.

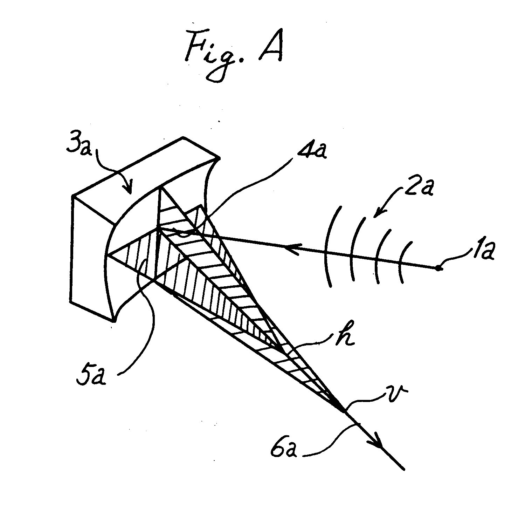

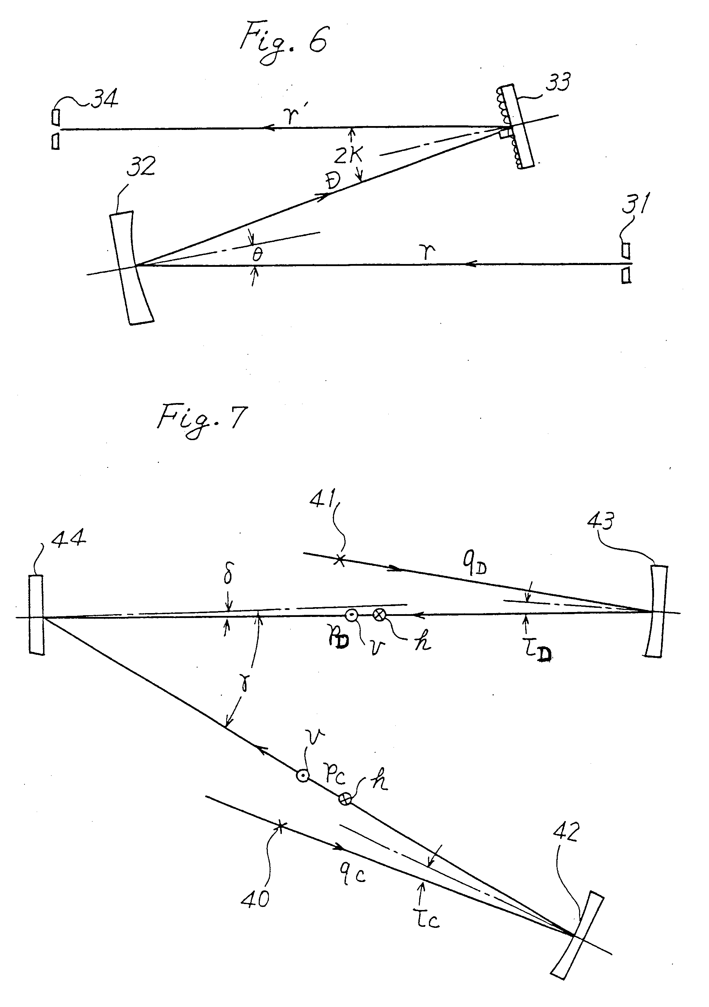

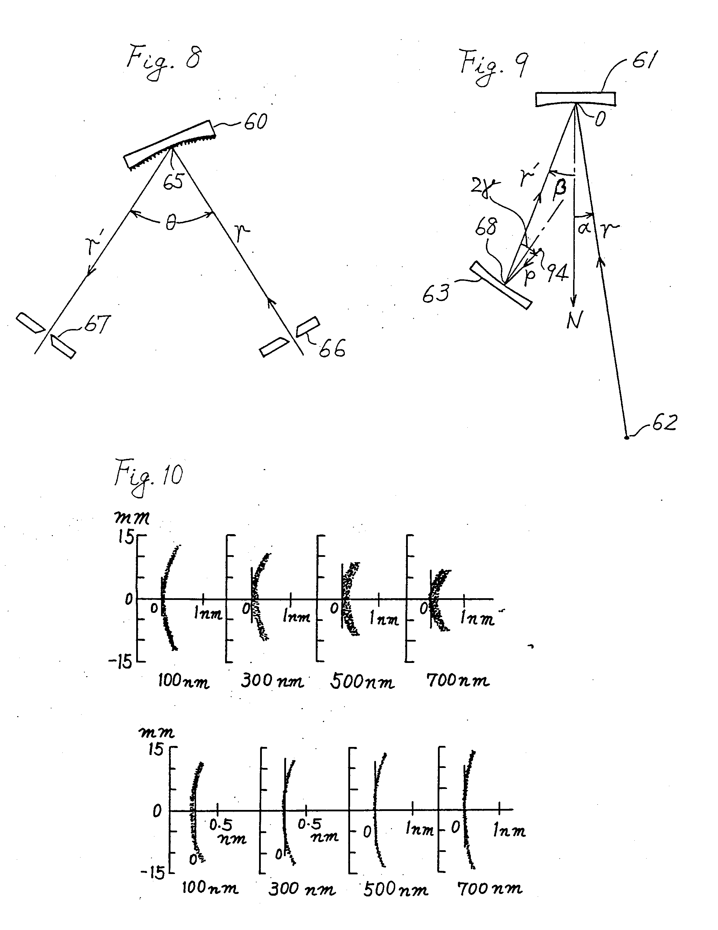

These drawings will be grouped in the following for convenience in description. Specifically, Figs. 1, 2, 3, 4 and 5 will be included in Group 1 and Figs. 6 and 7 will be in Group 2 and Figs. 8, 9 and 10 will be in Group 3.

It is to be noted here that all drawings are schematic and are not to scale, but they are designed to be useful to explain the invention as compared with related art and that these drawings are presented by way of illustrating specific embodiments. Therefore, the attached drawings should not be construed as limiting the present invention.

Description of Embodiments

Group 1

Embodiment 1

Fig. 1 illustrates a process for the manufacture of a grating by conventional art or a system of recording a groove pattern on a spherical grating by conventional art, wherein a grating substrate 1 is coated with a photo-sensitive material to be finished to become a diffraction grating and point sources 2, 3 radiate coherent laser light in spherical wave. This spherical beaming records, as noted hereinbefore, on the substrate the interference fringes formed by the intersection of two hyperboloids.

The laser light used has a wavelength of 441.6 nm and other parameters are noted below:

$$r_c = 0.9896, \qquad \gamma = -4.764°$$
$$r_d = 0.9908, \qquad \delta = 10.101°$$

Here the radius of curvature of the spherical grating substrate is unit length.

Embodiment 2

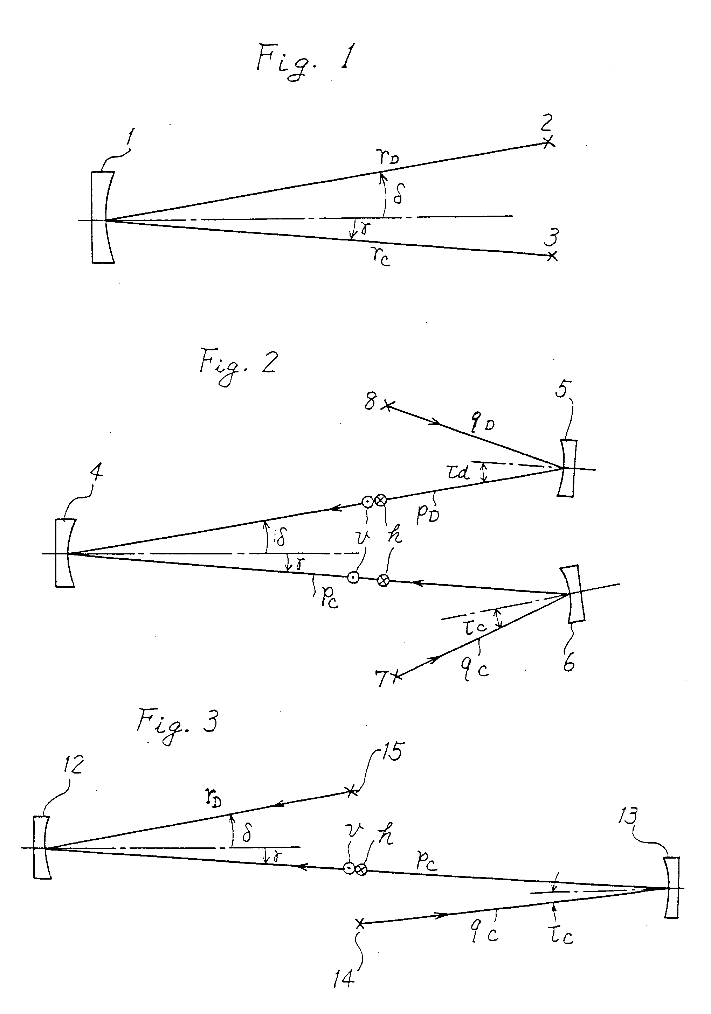

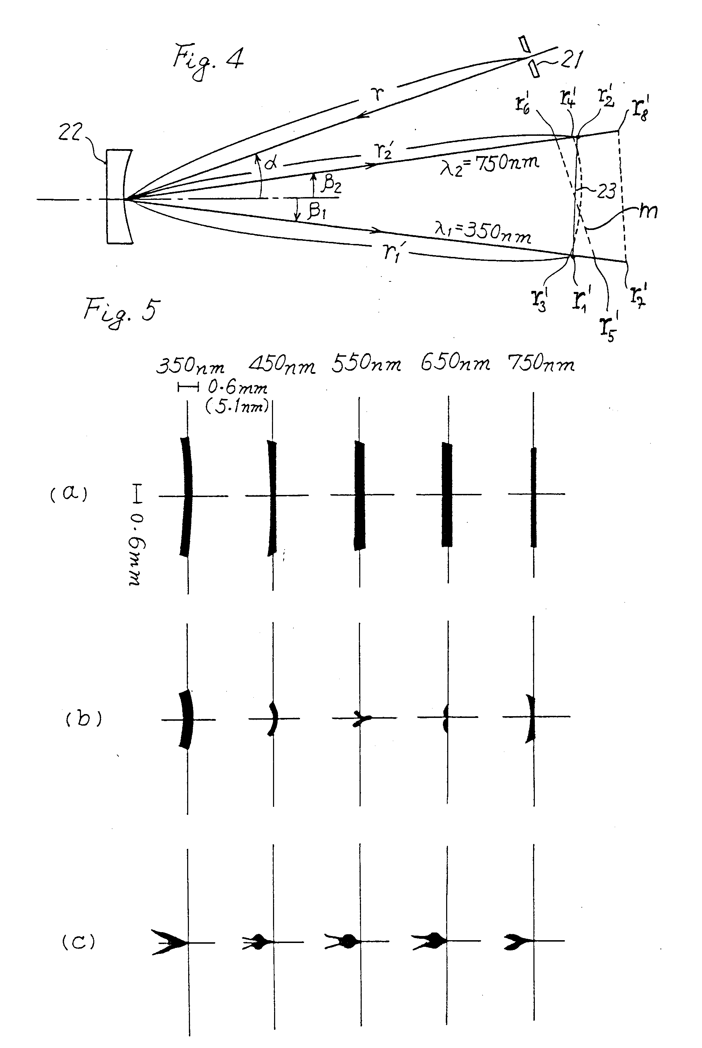

Fig. 2 illustrates a recording system of this invention to form a groove pattern wherein the vertical locus of the spectrum crosses or cuts with the horizontal locus of the spectrum on their midways (note a mark "m" in Fig. 4) and wherein 4 is a spherically concave grating substrate and 5 is a spherical mirror having a radius of curvature = 0.6132, and 6 is a toroidal mirror having two radii of 0.6132 horizontal and 0.5852 vertical, and 7, 8 are laser light points radiating stigmatic beams. Other recording parameters are given with use of a 441.6 nm laser;

$$p_C = 1.5819, \qquad q_C = 0.5923, \qquad \tau_C = 15.000° \text{ (degrees)}$$
$$p_D = 1.5831, \qquad q_D = 0.5923, \qquad \tau_D = 15.000°$$

$$\gamma = -4.764° \qquad \delta = 10.101°$$

Futher wherein h and v indicate horizontal and vertical focal points of laser beams reflected by the mirrors 5, 6. The fact of separated locations of h and v proves that initial stigmatic beams are converted to be astigmatic by reflection on the mirrors 5 and 6.

Here the radius of curvature of the grating substrate 4 is unit length.

Embodiment 3

Fig. 3 illustrates a recording system for a toroidal grating (note that the Fig. 2 shows the case of a spherical grating, in contrast) to have substantially equal horizontal and vertical foci, as will be noted in Fig. 4, of which locations are coincided with the horizontal focus of the grating manufactured in the system of Fig. 2. And wherein 12 in Fig. 3 is a toroidal grating substrate having two radii of 1.000 horizontal and 0.944 vertical, 13 is a spherical mirror having a radius of curvature = 1.000, and 14, 15 are laser light point sources to radiate spherical beams of 441.6 nm. Other particular parameters are:

$$p_C = 1.9854 \qquad q_C = 0.9957 \qquad \tau_C = 5.288°$$

$$r_D = 0.9908 \qquad \gamma = -4.764° \qquad \delta = 10.134°$$

Further, h and v indicate horizontal and vertical focal points of the beam from the laser source 14 after reflection on the mirror 13.

Embodiment 4

Fig. 4 is intended to show how locations of loci of spectrums in a spectrometer will change according to the choice of a concave grating which is an alternative of an inventive or a conventional grating, wherein 21 is an entrance slit and 22 is the spherical or toroidal grating to be evaluated, and 23 is a photographic plate or array detector which is assumed to be positioned to attain minimum departure from the loci of spectrums under the wave length range of 350 nm ($\lambda_1$) to 750 nm ($\lambda_2$), and further parameters involved are:

$$r = 0.9514, \qquad r_6' = 0.9707$$
$$r_1' = 1.0035, \qquad r_7' = 1.1101$$
$$r_2' = 1.0104, \qquad r_8' = 1.0979$$
$$r_3' = 0.9953, \qquad \alpha = 19.268°\ (degrees)$$
$$r_4' = 1.0092, \qquad \beta_1 = -7.164°$$
$$r_5' = 1.0504, \qquad \beta_2 = 6.309°$$

and radius of horizontal curvature (in the case of toroidal, approximate value) of the grating is 1.000 as the unit of length.

It is to be noted here that three broken lines noted in Fig. 4 indicate, as annotated, horizontal and vertical focal curves wherein three horizontal curves of the gratings produced according to Figs. 1, 2 and 3 are superposed on each other, on which a vertical one of the grating produced according to Fig. 3 is also superimposed, and two vertical curves of the gratings produced according to Figs. 1 and 2 are separated.

Embodiment 5

This embodiment is intended to show results of comparative evaluation of inventive and conventional gratings in terms of elimination of aberrations.

Fig. 5 illustrates to what extent aberrations were observed in experiments with use of the spectrometer shown in Fig. 4, wherein monochromatic lights having different wavelengths were introduced at the center of the entrance slit and received at the position of the image plane shown in Fig. 4 and wherein the gratings used have the same radius of curvature = 200 mm and the same area of 40 x 40 mm² manufactured in the different recording systems as shown in Fig. 1 (conventional), Fig. 2 (inventive example I) and Fig. 3 (inventive example II).

Accordingly, schematic drawings of series (a) of Fig. 5 relates to results obtained of the grating produced according to Fig. 1, and series (b) of Fig. 5 relates to results of the grating produced according to Fig. 2, and in the same way, series (c) of Fig. 5 relates to results of the grating produced according to Fig. 3, wherein results observed in the inventive series of (b) and (c) prove definite superiority over the conventional (a) in elimination of vertical aberrations.

In the above embodiments concerning the manufacture of gratings, conversion of stigmatic to astigmatic wave for the recording were performed by a toroidal mirror or a spherical mirror in off-axis orientation (in other words, the off-axis orientation results from projecting a substantially non-paraxial light beam onto an optical surface), but other available similar arrangements are mirrors of cylindrical and ellipsoidal shape and lenses of toroidal, spherical or cylindrical shape and further available are optical elements of which one side lens surface is metallically coated.

Group 2

Embodiment 6

Fig. 6 illustrates a spectrometer incorporating a flat grating of the invention wherein 31 is an entrance slit, 32 is a concave mirror, 33 is an inventive grating and 34 is an exit slit, and wherein these elements are assumed to be positioned to have minimum departure from the horizontal focal point in wavelength of 300 to 900 nm, and further wherein it is assumed that the concave mirror 32 has a radius of curvature = 1.000 (as the unit of length and the grating 33 has a grating constant = 1/1200 mm, of which application order being first order, other parameters are given below:

$$r = 0.7755, \qquad D = 0.6204, \qquad r' = 0.7064$$

$$\theta = 10 \text{ ° (degrees)}, \quad 2K = 20 \text{ °}$$

Embodiment 7

Shown in Fig. 7 is a recording system for manufacture of an inventive flat grating wherein 44 is a flat grating substrate, 40, 41 are recording beam sources, 42 is a spherical mirror having a radius of curvature = 1.000 (as the unit of length), 43 is a toroidal mirror having a horizontal radius of curvature = 1.0000 and a vertical radius of curvature = 0.9388. Other particular parameters are given with use of a laser having a 441.6 nm wavelength:

$$p_c = 1.9724, \qquad q_c = 0.9767, \qquad \tau_c = 5.121 \text{ °}$$

$$p_D = 2.0799, \qquad q_D = 0.9879, \qquad \tau_D = 4.956 \text{ °}$$

$$\gamma = 33.438°, \qquad \delta = 1.210°,$$

Further, two pairs of h and v indicate horizontal and vertical focal points produced by the mirrors 42, 43 in the same function as noted hereinbefore.

In this embodiment, the two reflecting mirrors 42, 43 are concave, but such is not a requisite condition. In place, the use of the concave mirrors in either position may be accepted, and further the grating substrate can be of cylindrical shape rather than being flat.

Group 3

Embodiment 8

This embodiment relates to a Seya-Namioka mount spectroscopy system (Fig. 8) with use of an inventive, concave grating, of which the manufacture is shown in Fig. 9. Fig. 10 shows the spectroscopic evaluation of aberrations in respect to the inventive and conventional gratings as explained below in detail.

The concave grating, manufactured and applied in this embodiment, has a spherical surface of 500 mm radius of curvature, and groove pitches of 600 lines/mm at the center of the grating. A spectroscopic system including this grating is shown in Fig. 10, wherein 66 is an entrance slit, 67 is an exit slit, and the distance (r) from the entrance slit 66 to the center 65 of the grating 60 is r = 409.8374 mm and distance (r') from the grating center 65 to the exit slit 67 is r' = 410.8190 mm, and the angular distance ($\theta$) between the entrance slit and the exit slit with respect to the grating center 65 is $\theta$ = 69.7083°, and the wavelength used is 100 to 700 nm.

Fig. 9 shows an arrangement for recording a groove pattern in the manufacture of the grating 60 (Fig. 8) wherein 61 is a spherical concave substrate having a radius of curvature = 500, then a normal line N at the grating center 0 and a plane through the normal line N are assumed and a point light source 62 is positioned at a point on the plane defined with a distance r = 1999.4 mm and with an angle $\alpha$ = 4.77° from the line N, and assuming another point on a line which defines an angle $\beta$ = 11° in opposite direction from point 62 with respect to the line N and with a distance r' = 871.4 mm, then a reflector mirror 63 of a spherical concave is positioned to fit the mirror center 68 at another point defined above, and further another light source 64 is positioned at a point on a line which angles twice of an angle ($\gamma$) defined between the line of 0 to 68 and a normal line at the reflector center 68 so as to form reflection on the center 68 (2 $\gamma$ = 16.4°) with a distance p = 204.9 mm from the center 68. Recording light used is laser light of 457.93 nm wavelength.

Fig. 10 shows comparative results of aberrations, noted in spot diagrams based on calculations, which are produced by the gratings of the invention in the upper half of Fig. 10 (no further compensation) and conventional gratings shown in the lower half of Fig. 10 after coma compensation, in the case of testing them with the spectroscope of Fig 8.

As noted in the foregoing, various replacements or modifications can he introduced to the present invention by those skilled in the art, for example, a spectrometer noted hereinabove may be a spectrophotometer or other optical device.

## Claims

1. An apparatus for producing a hologram consisting of a holographic grating (22, 33, 60) having a groove pattern formed thereon, said apparatus comprising:
   a first means (5, 8; 13, 14; 40, 42; 62) for generating and projecting a first coherent light beam onto a substrate (4, 12, 44, 61);
   a second means (6, 7; 15; 41, 43; 63, 64) for generating and projecting a second coherent light beam onto said substrate (4, 12, 44, 61), such that the interference of said first and second coherent beams forms said hologram on said substrate (4, 12, 44, 61);
   wherein said generating means (5, 8; 6, 7; 13, 14; 15; 40, 42; 41, 43; 62; 63, 64) of at least one of said first and second coherent light beams generates a light beam which is astigmatic, wherein said astigmatism has two different focal lengths (v, h) in a first plane and a second plane perpendicular thereto, said first plane being defined by the center (65, 0) of the hologram and the directions of the principal rays of the beams;
   characterized in that off-axis non-axisymmetrical optical means (3a, 5, 6, 13, 42, 43, 63) are used to provide stigmatic-to-astigmatic conversion of said beam or beams.

2. A method of producing a hologram consisting of a holographic grating (22, 33, 60) having a groove pattern, said method comprising:
   projecting two beams of coherent light onto a substrate (4, 12, 44, 61), wherein at least one of said beams is astigmatic, said astigmatism having two different focal lengths (v, h) in a first plane and in a second plane perpendicular thereto, such that the interference of said two beams forms said hologram on the substrate (4, 12, 44, 61), wherein said first plane is defined by the center (65, 0) of said hologram and directions of principal rays of the beams;
   characterized in that off-axis non-axisymmetrical optical means (3a, 5, 6, 13, 42, 43, 63) are used to provide stigmatic-to-astigmatic conversion of said beam or beams.

## Revendications

1. Dispositif pour produire un hologramme constitué par un réseau holographique (22,23,60), dans lequel est ménagé un réseau de rainures, ledit dispositif comprenant : des premiers moyens (5,8;13,14;40,42;62) pour produire et projeter un premier faisceau de lumière cohérente sur un substrat (4,12,44,61);

des seconds moyens (6,7;15;41,43;63,64) pour produire et projeter un second faisceau de lumière cohérente sur ledit substrat (4,12,44,61) de sorte que l'interférence desdits premier et second faisceaux de lumière cohérente forme ledit hologramme sur ledit substrat (4,12,44,61);

lesdits moyens générateurs (5,8;6,7;13,14;15;40,42;41,43; 62;63,64) d'au moins l'un desdits premier et second faisceaux de lumière cohérente produisent un faisceau de lumière qui est astigmatique, ledit astigmatisme ayant deux distances focales différentes (v,h) dans un premier plan et dans un second plan perpendiculaire au premier, ledit premier plan étant défini par le centre (65,0) de l'hologramme et les directions des rayons principaux des faisceaux;

caractérisé en ce que des moyens optiques non axisymétriques et à axe décalé (3a,5,6,13,42,43,63) sont utilisés pour réaliser une conversion stigmatique-astigmatique du ou desdits faisceaux.

2. Procédé pour produire un hologramme constitué par un réseau holographique (22,33,60) dans lequel est ménagé un réseau de rainures, ledit procédé consistant à :

projeter deux faisceaux de lumière cohérente sur un substrat (4,12,44,61), au moins l'un desdits faisceaux étant astigmatique, ledit astigmatisme présentant deux distances focales différentes (v,h) dans un premier plan et dans un second plan perpendiculaire au premier de sorte que l'interférence desdites deux faisceaux forme ledit hologramme sur le substrat (4,12,44,61), ledit premier plan étant défini par le centre (65,0) dudit hologramme et par des directions des rayons principaux des faisceaux;

caractérisé en ce que des moyens optiques non axisymétriques et à axe décalé (3a,5,6,13,42,63) sont utilisés pour réaliser une conversion stigmatiqueastigmatique du ou desdits faisceaux.

**Patentansprüche**

1. Einrichtung zum Erzeugen eines Hologramms, das aus einem holographischen Raster (22, 33, 60) besteht, welches ein darauf ausgebildetes Vertiefungsmuster hat, wobei diese Einrichtung folgendes umfaßt:

ein erstes Mittel (5, 8; 13, 14; 40, 42; 62) zum Erzeugen und Projizieren eines ersten kohärenten Lichtbündels auf ein Substrat (4, 12, 44, 61);

ein zweites Mittel (6, 7; 15; 41, 43; 63, 64) zum Erzeugen und Projizieren eines zweiten kohärenten Lichtbündels auf das Substrat (4, 12, 44, 61), derart, daß die Interferenz des ersten und zweiten kohärenten Lichtbündels das Hologramm auf dem Substrat (4, 12, 44, 61) ausbildet;

wobei das Erzeugungsmittel (5, 8; 6, 7; 13, 14; 15; 40, 42; 41, 43; 62; 63, 64) von wenigstens einem aus dem ersten und zweiten kohärenten Lichtbündel ein Lichtbündel erzeugt, welches astigmatisch ist, worin der Astigmatismus zwei unterschiedliche Brennweiten (v, h) in einer ersten Ebene und einer zweiten Ebene, die senkrecht dazu ist, hat, wobei die erste Ebene durch die Mitte (65, 0) des Hologramms und die Richtungen der Hauptstrahlen der Bündel definiert ist;

dadurch **gekennzeichnet,** daß außerachsige nicht-axialsymmetrische optische Mittel (3a, 5, 6, 13, 42, 43, 63) zum Vorsehen einer stigmatisch-zu-astigmatisch-Umwandlung des Bündels oder der Bündel verwendet werden.

2. Verfahren zum Erzeugen eines Hologramms, das aus einem holographischen Raster (22, 33, 60) besteht, welches ein Vertiefungsmuster hat, wobei das verfahren folgendes umfaßt:

projizieren von zwei Bündeln von kohärentem Licht auf ein Substrat (4, 12, 44, 61), worin wenigstens eines der Bündel astigmatisch ist, wobei der Astigmatismus zwei unterschiedliche Brennweiten (v, h) in einer ersten Ebene und in einer zweiten Ebene, die senkrecht dazu ist, hat, derart, daß die Interferenz der beiden Bündel das Hologramm auf dem Substrat (4, 12, 44, 61) ausbildet, wobei die erste Ebene durch die Mitte (65, 0) des Hologramms und die Richtungen der Hauptstrahlen der Bündel definiert ist;

dadurch **gekennzeichnet,** daß außerachsige nicht-axialsymmetrische optische Mittel (3a, 5, 6, 13, 42, 43, 63) zum Vorsehen einer stigmatisch-zu-astigmatisch-Umwandlung des Bündels oder der Bündel verwendet werden.

Fig. A

Fig. 1

Fig. 2

Fig. 3

Fig. 4

Fig. 5

Fig. 6

Fig. 7

Fig. 8

Fig. 9

Fig. 10